# EUROPEAN PATENT APPLICATION

(11) **EP 4 387 354 A1**
(43) Date of publication of application: **19.06.2024**
(21) Application number: 21953833.7
(22) Date of filing: 20.08.2021
(51) Int. Cl.: H04W 72/04

(54) **CONFIGURATION INFORMATION SENDING METHOD AND APPARATUS, CONFIGURATION INFORMATION OBTAINING METHOD AND APPARATUS, COMMUNICATION APPARATUS, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Steinbauer, Florian
(86) International application number: PCT/CN2021/113901
(87) International publication number: WO 2023/019592

(57) **Abstract**

The present disclosure relates to a configuration information sending method and apparatus, a configuration information obtaining method and apparatus, a communication apparatus, and a storage medium. The configuration information sending method comprises: sending a radio resource control (RRC) release message to a terminal, the RRC release message carrying configuration information suitable for the terminal to perform small data transmission (SDT) in an inactive state. According to the present disclosure, a base station can carry, in an RRC release message, configuration information suitable for a terminal to perform SDT in an inactive state, such that in the case that configuration information suitable for communication in a connection state and configured for the terminal is not suitable for the terminal to perform the SDT in the inactive state, the terminal can smoothly perform the SDT in the inactive state according to the configuration information carried in the RRC release message.

## Description

### TECHNICAL FIELD

The present disclosure relates to the field of communication technologies, and in particular to configuration information sending methods, configuration information obtaining methods, configuration information sending apparatuses, configuration information obtaining apparatuses, communication apparatuses and storage media.

### BACKGROUND

When terminals are in an idle state or an inactive state, the terminals may perform small data transmission (SDT) based on resources configured at a network side.

During performing the SDT, a terminal still needs to perform communication based on network side configurations. Network side device(s) configures some configuration information for a terminal when the terminal is in a connected state. While, the configuration information is suitable for the terminal in the connected state to perform communication with a base station, but may not be suitable for the terminal to perform SDT.

### SUMMARY

In view of this, one or more embodiments of the present disclosure provide configuration information sending methods, configuration information obtaining methods, configuration information sending apparatuses, configuration information obtaining apparatuses, communication apparatuses and computer readable storage media, so as to solve the technical problems in the prior arts.

According to a first aspect of embodiments of the present disclosure, there is provided a configuration information sending method, which is performed by a base station. The method includes: sending a Radio Resource Control (RRC) release message to a terminal, where the RRC release message carries configuration information suitable for the terminal to perform Small Data Transmission (SDT) in an inactive state.

According to a second aspect of embodiments of the present disclosure, there is provided a configuration information obtaining method, which is performed by a terminal. The method includes: receiving an RRC release message sent by a base station; and obtaining configuration information for performing Small Data Transmission (SDT) in an inactive state from the RRC release message.

According to a third aspect of embodiments of the present disclosure, there is provided a configuration information sending apparatus, which includes one or more processors. The one or more processors are configured to send a Radio Resource Control (RRC) release message to a terminal, where the RRC release message carries configuration information suitable for the terminal to perform Small Data Transmission (SDT) in an inactive state.

According to a fourth aspect of embodiments of the present disclosure, there is provided a configuration information obtaining apparatus, which includes one or more processors. The one or more processors are configured to: receive an RRC release message sent by a base station; obtain configuration information for performing Small Data Transmission (SDT) in an inactive state from the RRC release message.

According to a fifth aspect of embodiments of the present disclosure, there is provided a communication apparatus, which includes a processor and a memory for storing computer programs, where the computer programs are executed by the processor to perform the above configuration information sending method.

According to a sixth aspect of embodiments of the present disclosure, there is provided a communication apparatus, which includes a processor and a memory for storing computer programs, where the computer programs are executed by the processor to perform the above configuration information obtaining method.

According to a seventh aspect of embodiments of the present disclosure, there is provided a computer readable storage medium, storing computer programs, where the computer programs are executed by a processor to perform steps of the above configuration information sending method.

According to an eighth aspect of embodiments of the present disclosure, there is provided a computer readable storage medium, storing computer programs, where the computer programs are executed by a processor to perform steps of the above configuration information obtaining method.

Based on the embodiments of the present disclosure, a base station may carry, in an RRC release message, configuration information suitable for a terminal to perform the SDT in an inactive state. Thus, configuration information configured for the terminal to perform communication in the connected state is not used for the terminal to perform the SDT in the inactive state, and the terminal can smoothly perform the SDT in an inactive state based on the configuration information carried in the RRC release message.

### BRIEF DESCRIPTION OF DRAWINGS

In order to more clearly describe the technical solutions of the embodiments of the present disclosure, the accompanying drawing involved in the descriptions of the embodiments will be briefly introduced below. Apparently, the following drawings only show some embodiments of the present disclosure. Those skilled in the art may obtain other relevant drawings based on these drawings without carrying out creative work.
FIG. 1 is a schematic flowchart illustrating a configuration information sending method according to an embodiment of the present disclosure.
FIG. 2 is a schematic flowchart illustrating a configuration information obtaining method according to an embodiment of the present disclosure.
FIG. 3 is a schematic flowchart illustrating another configuration information obtaining method according to an embodiment of the present disclosure.
FIG. 4 is a schematic flowchart illustrating yet another configuration information obtaining method according to an embodiment of the present disclosure.
FIG. 5 is a schematic flowchart illustrating yet another configuration information obtaining method according to an embodiment of the present disclosure.
FIG. 6 is a schematic flowchart illustrating yet another configuration information obtaining method according to an embodiment of the present disclosure.
FIG. 7 is a schematic flowchart illustrating yet another configuration information obtaining method according to an embodiment of the present disclosure.
FIG. 8 is a schematic flowchart illustrating yet another configuration information obtaining method according to an embodiment of the present disclosure.
FIG. 9 is a schematic block diagram illustrating an apparatus for sending configuration information according to an embodiment of the present disclosure.
FIG. 10 is a schematic block diagram illustrating an apparatus for obtaining configuration information according to an embodiment of the present disclosure.

### DETAILED DESCRIPTION

The technical solutions of embodiments of the present disclosure will be described clearly and fully below in combination with drawings in the embodiments of the present disclosure. It is apparent that the described embodiments are merely some of embodiments of the present disclosure rather than all embodiments. Based on the embodiments in the present disclosure, other embodiments obtained by those of ordinary skill in the art without carrying out creative work shall all fall into the scope of protection of the present disclosure.

The terms used in the present disclosure are only for the purpose of describing specific embodiments, and are not intended to limit the present disclosure. The singular forms "a", "the" and "said" used in the present disclosure and the appended claims are also intended to include plural forms, unless the context clearly indicates other meanings. It should also be understood that the term "and/or" used herein refers to and includes any and all possible combinations of one or more associated listed items.

It is to be understood that, although the terms "first", "second", "third", and the like may be used in the present disclosure to describe various information, such information should not be limited to these terms. These terms are only used to distinguish one category of information from another. For example, without departing from the scope of the present disclosure, first information may also be referred to as second information, and similarly, the second information may also be referred to as the first information. Depending on the context, the term "if' as used herein may be interpreted as "when" or "upon" or "in response to determining".

For the purpose of conciseness and ease of understanding, the terms used to represent a size relationship herein are "greater than", "less than", "higher than" and "lower than". But, those skilled in the arts can understand that the term "greater than" also includes the meaning of "greater than or equal to", and the term "less than" also includes the meaning of "less than or equal to"; the term "higher than" includes the meaning of "higher than or equal to", and the term "lower than" also includes the meaning of "lower than or equal to".

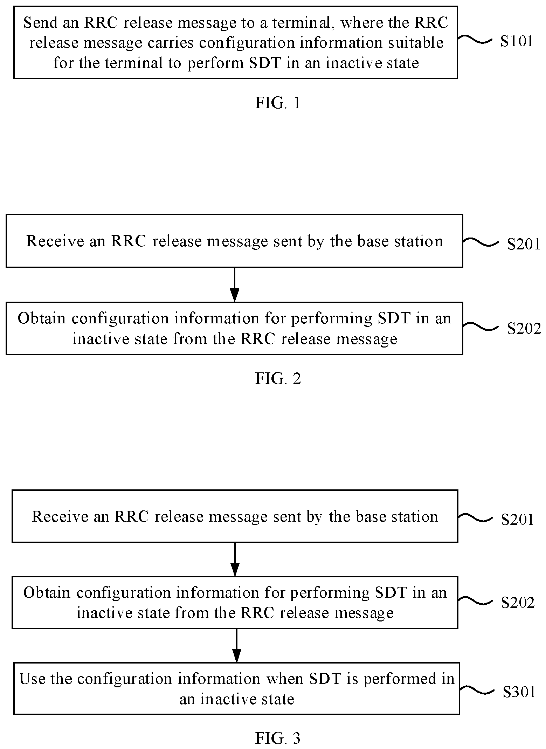

FIG. 1 is a schematic flowchart illustrating a configuration information sending method according to an embodiment of the present disclosure. The configuration information sending method in this embodiment may be performed by a base station. The base station may include but not limited to a base station in a communication system of 4G, 5G, 6G or the like. The base station may communicate with a terminal. The terminal may include but not limited to a communication apparatus such as a smart phone, a tablet computer, a wearable device, a sensor, an internet-of-things device, or the like.

As shown in FIG. 1, the configuration information sending method may include the following steps.

At step S101, a Radio Resource Control (RRC) release message is sent to a terminal, where the RRC release message carries configuration information suitable for the terminal to perform Small Data Transmission (SDT) in an inactive state.

In one embodiment, the base station may, when determining the terminal is to exit a connected state, send an RRC release message to the terminal to indicate the terminal to exit the connected state, where the RRC release message may indicate the terminal to enter an idle state or inactive state.

The RRC release message may carry configuration information suitable for the terminal to perform SDT in an inactive state and thus the terminal can use the configuration information to perform the SDT when the terminal is in the inactive state. In one embodiment, the configuration information includes at least one of: Logical Channel (LC) configuration information, Buffer Status Report (BSR) configuration information, or Power Headroom Report (PHR) configuration information.

Performing SDT by the terminal in the inactive state may include a manner as performing in a random access process. For example, the terminal may send data, which is carried in Msg3, to the base station in a four-step random access process, and for another example, send data, which is carried in MsgA, to the base station in a two-step random access process. Or, performing SDT by the terminal in the inactive state may include a manner as sending data to the base station via a dedicated Physical Uplink Shared Channel (PUSCH) configured by a network side. The specific implementations may include but not limited to Configured Grant (CG) and Preallocated Uplink Resource (PUR).

When performing SDT in the inactive state, the terminal may need to not only send data to the base station based on a time frequency resource configured by the base station but also send other information, for example, a Buffer Status Report (BSR) or a Power Headroom Report (PHR), which are constrained by Logical Channel Prioritization (LCP) mapping restriction.

Although the terminal in a connected state also needs to send the BSR or the PHR to the base station which is constrained by the LCP mapping restriction, the BSR configuration information, the PHR configuration, the LCP mapping restriction, and the like configured by the base station for the terminal in the connected state may not be suitable for the terminal to perform SDT when the terminal is in the inactive state.

Based on an embodiment of the present disclosure, the base station may carry, in an RRC release message, configuration information suitable for the terminal to perform the SDT in the inactive state. Thus, configuration information configured for the terminal to perform communication in the connected state is not used for the terminal to perform the SDT in the inactive state, and the terminal can smoothly perform the SDT in the inactive state based on the configuration information carried in the RRC release message.

The manner in which the terminal determines that the configuration information carried in the RRC release message is suitable for the terminal to perform SDT in the inactive state will be described below with several embodiments. The determination manner is not limited to the following embodiments and may be set based on requirements.

In one embodiment, the configuration information may be disposed at an agreed position in the RRC release message, and the configuration information at the agreed position is agreed to be used for the terminal to perform the SDT in the inactive state.

In one embodiment, SDT configuration information may be carried in the RRC release message, and then the configuration information suitable for the terminal to perform the SDT in the inactive state is disposed in the SDT configuration information. Thus, when the terminal obtains the configuration information suitable for the terminal to perform the SDT in the inactive state from the SDT configuration information, the terminal may determine that the obtained configuration information is used for performing the SDT in the inactive state.

In one embodiment, indication information may be carried in the RRC release message to indicate a role of the carried configuration information and hence, the terminal can, based on the indication information, determine the configuration information is used for performing the SDT in the inactive state.

In one embodiment, the LC configuration information includes LCP mapping restriction.

When the terminal performs the SDT in the inactive state, the transmission is still to be constrained by the LCP mapping restriction. Therefore, the LCP mapping restriction may be disposed in the LC configuration information to ensure the terminal can, when performing the SDT in the inactive state, perform reasonable restriction on uplink resources used on each logical channel based on the LCP mapping restriction.

In one embodiment, the LCP mapping restriction includes at least one of: an allowed configured grant list (allowedCG-List), or an allowed configured grant list for small data transmission (allowedCG-List for SDT).

The allowedCG-List may include allowed configured grant(s) for transmission; similarly, the allowedCG-List for SDT may include allowed configured grant(s) for small data transmission.

Because that the terminal may perform the SDT based on CG implementation upon subsequently entering the inactive state, that is, the terminal can perform the SDT on an uplink resource corresponding to the CG, at least one of the allowedCG-List or the allowedCG-List for SDT is configured in the LCP mapping restriction, so that the terminal may, based on the allowedCG-List and/or the allowedCG-List for SDT, determine the resource corresponding to the CG on which the SDT is performed. In this way, the terminal can perform the SDT at least in the inactive state.

It should be noted that when the LCP mapping restriction includes the allowedCG-List and the allowedCG-List for SDT, since the allowedCG-List for SDT is specially set for SDT, the allowedCG-List for SDT has better adaptability to the SDT. Therefore, the UE can perform the SDT based on the resource corresponding to the CG configured in the allowedCG-List for SDT.

In one embodiment, the LCP mapping restriction may further include at least one of:
an allowed Sub-Carrier Spacing list (allowedSCS-List), which may include allowed sub-carrier spacing(s) for transmission;
a maximum Physical Uplink Shared Channel duration (maxPUSCH-Duration), which may include a maximum PUSCH duration allowed for transmission;
configured grant type 1 allowed (configuredGrantTypelAllowed), which may include whether a type 1 CG can be used for transmission;
allowed serving cells (allowedServingCells), which may include allowed cell(s) for transmission; or
an allowed physical layer priority index (allowedPHY-PriorityIndex), which may include allowed physical layer priority index(es) of a dynamic grant for transmission.

In one embodiment, the LCP mapping restriction may include other contents besides the allowedCG-List and/or the allowedCG-List for SDT. Therefore, appropriate restriction may be performed on the LCP mapping for the terminal to perform the SDT in the inactive state from other aspects, helping ensure the terminal can smoothly perform the SDT in the inactive state.

In one embodiment, the LC configuration information reuses a Logical Channel Configuration (LogicalChannelConfig) Information Element (IE) or is in a newly-introduced IE.

In the RRC release message, a Logical Channel Config IE may be disposed to carry logical channel configuration information, and the LC configuration information in this embodiment may be sent by the LogicalChannelConfig IE. Thus, it is not necessary to introduce a new IE into the RRC release message, avoiding adjustment to the current RRC release message. Or, a new IE may also be introduced into the RRC release message to carry the LC configuration information.

Furthermore, the LC configuration information may also be carried in an upper-level IE of the Logical Channel Config IE, for example, an RLC-BearerConfig IE, or in an upper-level IE of the RLC-BearerConfig IE, for example, a Cell Group Config IE.

In one embodiment, the BSR configuration information includes at least one of: a periodic buffer status report timer (periodicBSR-Timer) or a retransmission buffer status report timer (retxBSR-Timer).

In one embodiment, when it is determined that the SDT of the terminal supports a scheduling request, the BSR configuration information further includes a logical channel scheduling request delay timer (logicalChannelSR-DelayTimer).

The uplink transmission performed by the terminal during the SDT is limited compared with that in the connected state. For example, some terminals support sending a Scheduling Request (SR) during the SDT while some terminals do not support sending the SR. The logicalChannelSR-DelayTimer is mainly suitable for a process of sending the SR by the terminal. If the terminal does not support sending the SR, even the logicalChannelSR-DelayTimer is configured for the terminal, the terminal will not use the logicalChannelSR-DelayTimer, leading to wastes of communication resources.

Hence, the base station may determine whether the SDT of the terminal supports the SR. If the SDT of the terminal supports the SR, the logicalChannelSR-DelayTimer may be further carried in the configuration information; if the SDT of the terminal does not support the SR, it is not necessary to carry the logicalChannelSR-DelayTimer in the configuration information, avoiding wastes of communication resources.

In one embodiment, the BSR configuration information reuses a buffer status report configuration (bsr-config) IE or is in a newly-introduced IE.

In the RRC release message, a bsr-Config IE may be disposed to carry BSR configuration information, and the BSR configuration information in this embodiment may be sent by the bsr-Config IE. Thus, it is not necessary to introduce a new IE into the RRC release message, avoiding adjustment to the current RRC release message. Or, a new IE may also be introduced into the RRC release message to carry the BSR configuration information.

Furthermore, the BSR configuration information may also be carried in an upper-level IE of the bsr-Config IE, for example, a mac-CellGroupConfig IE.

In one embodiment, the PHR configuration information may include at least one of: a power headroom report periodic timer (phr-PeriodicTimer), a power headroom report prohibit timer (phr-ProhibitTimer), power headroom report transmission power factor change (phr-Tx-PowerFactorChange), multiple power headroom reports (multiplePHR), power headroom report type 2 other cells (phr-Type2OtherCell), a power headroom report mode other configured grant (phr-ModeOtherCG), or frequency range (FR) 2 maximum permissible exposure reporting (mpe-Reporting-FR2).

In one embodiment, the PHR configuration information reuses a power headroom report configuration (phr-Config) IE or is in a newly-introduced IE.

In the RRC release message, a phr-Config IE may be disposed to carry PHR configuration information, and the PHR configuration information in this embodiment may be sent by the phr-Config IE. Thus, it is not necessary to introduce a new IE into the RRC release message, avoiding adjustment to the current RRC release message. Or a new IE may also be introduced into the RRC release message to carry the PHR configuration information.

Furthermore, the BSR configuration information may also be carried in an upper-level IE of the phr-Config IE, for example, a mac-CellGroupConfig IE.

In one embodiment, when the RRC release message is used to indicate the terminal to enter the inactive state, the RRC release message carries the configuration information.

The RRC release message may be used to indicate the terminal to enter the idle state or the inactive state. In embodiments of the present disclosure, the configuration information carried in the RRC release message is used for the terminal to perform the SDT in the inactive state, and therefore, the base station may determine in advance whether the RRC release message is used to indicate the terminal to enter the idle state or the inactive state.

If the RRC release message is used to indicate the terminal to enter the idle state, it is not necessary to carry the configuration information in the RRC release message, avoiding wastes of communication resources. If the RRC release message is used to indicate the terminal to enter the inactive state, the configuration information is carried in the RRC release message, so that the terminal may perform the SDT after entering the inactive state.

FIG. 2 is a schematic flowchart illustrating a configuration information obtaining method according to an embodiment of the present disclosure. The configuration information obtaining method in this embodiment may be performed by a terminal. The terminal may serve as a user equipment (UE) to communicate with a base station. The base station may include but not limited to a base station in a communication system of 4G, 5G, 6G or the like. The terminal may include but not limited to a communication apparatus such as a smart phone, a tablet computer, a wearable device, a sensor, or an internet-of-things device or the like.

As shown in FIG. 2, the configuration information obtaining method may include the following steps.

At step S201, an RRC release message sent by the base station is received.

At step S202, configuration information for performing SDT in an inactive state is obtained from the RRC release message.

In one embodiment, the base station may, when determining the terminal is to exit a connected state, send the RRC release message to the terminal to indicate the terminal to exit the connected state, where the RRC release message may indicate the terminal to enter an idle state or an inactive state.

Configuration information suitable for the terminal to perform the SDT in the inactive state may be carried in the RRC release message, where the configuration information can be used by the terminal to perform the SDT in the inactive state. In one embodiment, the configuration information includes at least one of: LC configuration information, BSR configuration information, or PHR configuration information.

Performing SDT by the terminal in the inactive state may include a manner as performing in a random access process. For example, the terminal may send data, which is carried in Msg3, to the base station in a four-step random access process, and for another example, send data, which is carried in MsgA, to the base station in a two-step random access process. Or, performing SDT by the terminal in the inactive state may include a manner as sending data to the base station via a dedicated PUSCH configured by a network side. The specific implementations may include but not limited to Configured Grant (CG) and Preallocated Uplink Resource (PUR).

When performing SDT in the inactive state, the terminal may need to not only send data to the base station based on a time frequency resource configured by the base station but also send other information, for example, a BSR or PHR, which are constrained by LCP mapping restriction.

Although the terminal in a connected state also needs to send the BSR or the PHR to the base station which is constrained by the LCP mapping restriction, the BSR configuration information, the PHR configuration, the LCP mapping restriction, and the like configured by the base station for the terminal in the connected state may not be suitable for the terminal to perform SDT when the terminal is in the inactive state.

Based on an embodiment of the present disclosure, the base station may carry, in an RRC release message, configuration information suitable for the terminal to perform the SDT in the inactive state. After receiving the RRC release message, the terminal may obtain the configuration information for performing the SDT in the inactive state from the RRC release message and use it for performing the SDT in the inactive state. When the configuration information configured for the terminal to perform communication in a connected state is not used for the terminal to perform the SDT in the inactive state, the terminal can smoothly perform the SDT in the inactive state based on the configuration information carried in the RRC release message.

The manner in which the terminal determines that the configuration information carried in the RRC release message is suitable for the terminal to perform SDT in the inactive state will be described below with several embodiments. The determination manner is not limited to the following embodiments and may be set based on requirements.

In one embodiment, the configuration information may be disposed at an agreed position in the RRC release message, and the configuration information at the agreed position is agreed to be used for the terminal to perform the SDT in the inactive state.

In one embodiment, SDT configuration information may be carried in the RRC release message, and then the configuration information suitable for the terminal to perform the SDT in the inactive state is disposed in the SDT configuration information. Thus, when the terminal obtains the configuration information suitable for the terminal to perform the SDT in the inactive state from the SDT configuration information, the terminal may determine that the obtained configuration information is used for performing the SDT in the inactive state.

In one embodiment, indication information may be carried in the RRC release message to indicate a role of the carried configuration information and hence, the terminal can, based on the indication information, determine the configuration information is used for performing the SDT in the inactive state.

In one embodiment, the configuration information includes at least one of: LC configuration information, BSR configuration information, or PHR configuration information.

In one embodiment, the LC configuration information includes LCP mapping restriction.

When the terminal performs the SDT in the inactive state, the transmission is still to be constrained by the LCP mapping restriction. Therefore, the LCP mapping restriction may be disposed in the LC configuration information to ensure the terminal can, when performing the SDT in the inactive state, perform reasonable restriction on uplink resources used on each logical channel based on the LCP mapping restriction.

In one embodiment, the LCP mapping restriction includes at least one of: allowed CG-List, or allowedCG-List for SDT.

Because that the terminal may perform the SDT based on CG implementation upon subsequently entering the inactive state, that is, the terminal can perform the SDT on an uplink resource corresponding to the CG, at least one of the allowedCG-List or the allowedCG-List for SDT is configured in the LCP mapping restriction, so that the terminal may, based on the allowedCG-List and/or the allowedCG-List for SDT, determine the resource corresponding to the CG on which the SDT is performed. In this way, the terminal can perform the SDT at least in the inactive state.

It should be noted that when the LCP mapping restriction includes the allowedCG-List and the allowedCG-List for SDT, since the allowedCG-List for SDT is specially set for SDT, the allowedCG-List for SDT has better adaptability to the SDT. Therefore, the UE can perform the SDT based on the resource corresponding to the CG configured in the allowedCG-List for SDT.

In one embodiment, the LCP mapping restriction may further include at least one of: allowedSCS-List, max PUSCH-Duration, configuredGrantType1Allowed, allowedServingCells, or allowedPHY-PriorityIndex.

In one embodiment, the LCP mapping restriction may include other contents besides the allowedCG-List and/or the allowedCG-List for SDT. Therefore, appropriate restriction may be performed on the LCP mapping for the terminal to perform the SDT in the inactive state from other aspects, helping ensure the terminal can smoothly perform the SDT in the inactive state

In one embodiment, the BSR configuration information includes at least one of: periodicBSR-Timer or retxBSR-Timer.

In one embodiment, when it is determined that the SDT of the terminal supports a scheduling request, the BSR configuration information further includes logicalChannelSR-DelayTimer.

In one embodiment, the PHR configuration information may include at least one of: phr-PeriodicTimer, phr-ProhibitTimer, phr-Tx-PowerFactorChange, multiple PHRs, phr-Type2OtherCell, phr-ModeOtherCG, or mpe-Reporting-FR2.

FIG. 3 is a schematic flowchart illustrating another configuration information obtaining method according to an embodiment of the present disclosure. As shown in FIG. 3, the method further includes the following steps.

At step S301, the configuration information is used when SDT is performed in an inactive state.

In one embodiment, since the configuration information carried in the RRC release message is provided for the terminal to perform the SDT in the inactive state, the terminal may not use the configuration information in another state, for example, in an idle state or connected state, but use the configuration information only when performing the SDT in the inactive state.

Hence, when configuration information configured by the base station for the terminal in another state is different from the configuration information carried in the RRC release message, the communication problem resulting from communication performed by the terminal in another state by using the configuration information carried in the RRC release message can be avoided.

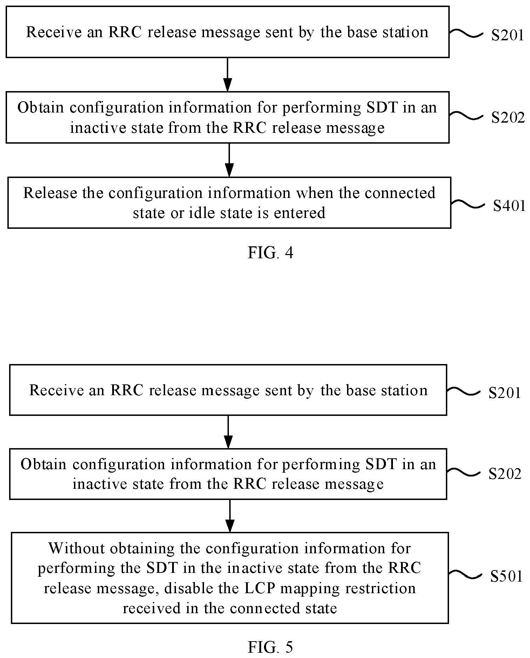

FIG. 4 is a schematic flowchart illustrating another configuration information obtaining method according to an embodiment of the present disclosure. As shown in FIG. 4, the method further includes the following step.

At step S401, the configuration information is released when the connected state or idle state is entered.

In one embodiment, since the configuration information carried in the RRC release message is provided for the terminal to perform the SDT in the inactive state, the terminal may release the configuration information obtained from the RRC release message upon entering the connected state or idle state, helping reduce occupation of the storage space of the terminal.

Furthermore, the base station may also configure configuration information used by the terminal in the connected state or idle state, for example, configure LC configuration information, BSR configuration information, and PHR configuration information suitable for the terminal in the connected state. After entering the connected state, the terminal may use the LC configuration information, the BSR configuration information, and the PHR configuration information to perform communication in the connected state. For example, the base station may also configure LC configuration information, BSR configuration information, and PHR configuration information suitable for the terminal to perform SDT in the idle state. After entering the idle state, the terminal may use the LC configuration information, the BSR configuration information, and the PHR configuration information to perform the SDT in the idle state.

In one embodiment, the configuration information includes LC configuration information and the terminal also stores LC configuration information received in the connected state.

The LC configuration information received in the connected state may be suitable for the terminal to perform communication in the connected state. For example, reasonable restriction may be performed on an uplink resource on each logical channel used by the terminal for communication in the connected state.

In this case, the LC configuration information received in the connected state may be suitable for the terminal to perform the SDT in the inactive state or not suitable for the terminal to perform the SDT in the inactive state, which may be indicated by the base station or be determined by the terminal itself. The processing manner for the LC configuration information received in the connected state will be illustrated below with several embodiments.

FIG. 5 is a schematic flowchart illustrating another configuration information obtaining method according to an embodiment of the present disclosure. As shown in FIG. 5, the LC configuration information received in the connected state includes LCP mapping restriction. The method further includes the following step.

At step S501, without obtaining the configuration information for performing the SDT in the inactive state from the RRC release message, the LCP mapping restriction received in the connected state is disabled.

In one embodiment, when the RRC release message does not carry the configuration information for performing the SDT in the inactive state, the terminal may deactivate the LCP mapping restriction received in the connected state.

Since the LCP mapping restriction received in the connected state is suitable for the terminal to perform communication in the connected state but possibly not suitable for the terminal to perform the SDT in the inactive state, even if no configuration information for performing the SDT in the inactive state is obtained from the RRC release message, the LCP mapping restriction received in the connected state may be disabled to avoid inappropriate restriction on the terminal in the inactive state.

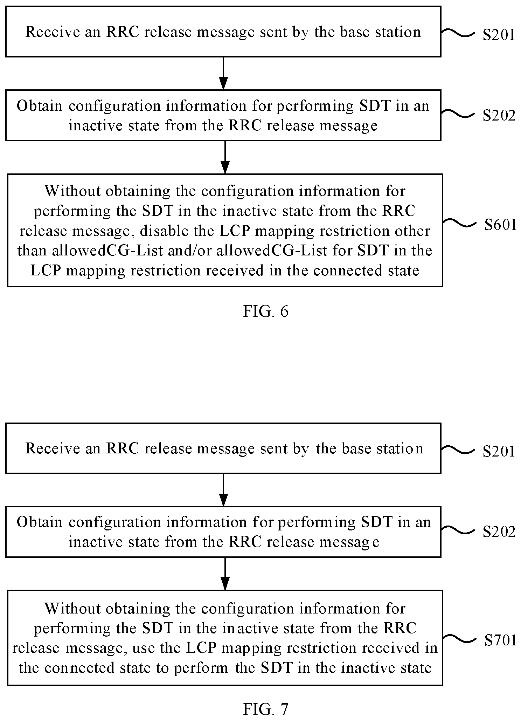

FIG. 6 is a schematic flowchart illustrating another configuration information obtaining method according to an embodiment of the present disclosure. As shown in FIG. 6, the LC configuration information received in the connected state includes LCP mapping restriction, which includes allowedCG-List. The method further includes the following step.

At step S601, without obtaining the configuration information for performing the SDT in the inactive state from the RRC release message, the LCP mapping restriction other than allowedCG-List and/or allowedCG-List for SDT in the LCP mapping restriction received in the connected state is disabled.

In one embodiment, since the terminal needs to at least determine a resource required for performing the SDT before performing the SDT in the inactive state, and because allowed configuration grant(s) for transmission is disposed in the allowedCG-List and the allowedCG-List for SDT in the LCP mapping restriction, the terminal may determine a configuration grant resource for performing the SDT based on one of the allowedCG-List and the allowedCG-List for SDT.

As a result, without obtaining the configuration information for performing the SDT in the inactive state from the RRC release message, in order to ensure the terminal can perform the SDT in the inactive state, it is required to retain the allowedCG-List and/or allowedCG-List for SDT in the LCP mapping restriction received in the connected state, in spite of disabling the LCP mapping restriction received in the connected state.

FIG. 7 is a schematic flowchart illustrating another configuration information obtaining method according to an embodiment of the present disclosure. As shown in FIG. 7, the LC configuration information received in the connected state includes LCP mapping restriction and the method further includes the following step.

At step S701, without obtaining the configuration information for performing the SDT in the inactive state from the RRC release message, the LCP mapping restriction received in the connected state is used to perform the SDT in the inactive state.

In one embodiment, without obtaining the configuration information for performing the SDT in the inactive state from the RRC release message, in order to ensure the SDT can be performed in the inactive state, the LCP mapping restriction received in the connected state may be used.

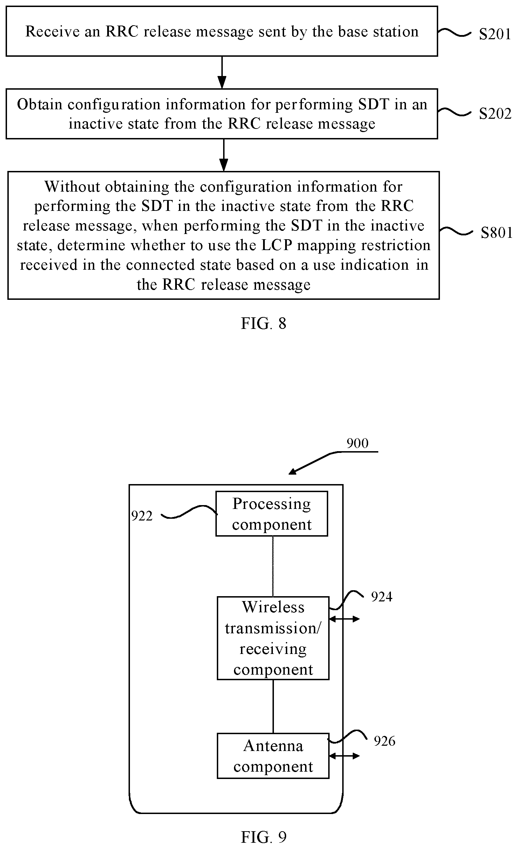

FIG. 8 is a schematic flowchart illustrating another configuration information obtaining method according to an embodiment of the present disclosure. As shown in FIG. 8, the LC configuration information received in a connected state includes LCP mapping restriction and the method further includes the following step.

At step S801, without obtaining the configuration information for performing the SDT in the inactive state from the RRC release message, when performing the SDT in the inactive state, whether to use the LCP mapping restriction received in the connected state is determined based on a use indication in the RRC release message.

In one embodiment, the base station may carry a use indication in the RRC release message to indicate whether the LCP mapping restriction received by the terminal in the connected state is suitable for performing the SDT in the inactive state.

When determining based on the use indication that the LCP mapping restriction received in the connected state can be used for performing the SDT in the inactive state, the terminal may use the LCP mapping restriction received in the connected state to perform the SDT in the inactive state, for example, use a CG resource corresponding to the allowedCG-List in the LCP mapping restriction to perform the SDT.

Corresponding to the above embodiments of the configuration information sending method and the configuration information obtaining method, the present disclosure further provides embodiments of a configuration information sending apparatus and a configuration information obtaining apparatus.

An embodiment of the present disclosure provides a configuration information sending apparatus, which may be applied to a base station. The base station includes but not limited to a base station in a communication system of 4G, 5G, 6G and the like. The base station may communicate with a terminal. The terminal includes but not limited to a communication apparatus such as a smart phone, a tablet computer, a wearable device, a sensor, an internet-of-things device or the like.

In one embodiment, the configuration information sending apparatus includes one or more processors. The one or more processors are configured to:
send a RRC release message to a terminal, where the RRC release message carries configuration information suitable for the terminal to perform SDT in an inactive state.

In one embodiment, the configuration information includes at least one of: LC configuration information, BSR configuration information, or PHR configuration information.

In one embodiment, the LC configuration information includes LCP mapping restriction.

In one embodiment, the LCP mapping restriction includes at least one of: allowedCG-List, or allowed CG-List for SDT.

In one embodiment, the LCP mapping restriction further includes at least one of: allowedSCS-List, max-PUSCH-Duration, configuredGrantType1 allowed, allowed ServingCells, or allowedPHY-PriorityIndex.

In one embodiment, the LC configuration information reuses a Logical Channel Configuration (Logical Channel Config) Information Element (IE) or is in a newly-introduced IE.

In one embodiment, the BSR configuration information includes at least one of: periodic BSR-Timer; or retxBSR-Timer.

In one embodiment, when it is determined that the SDT of the terminal supports a scheduling request, the BSR configuration information further includes: logicalChannelSR-DelayTimer.

In one embodiment, the BSR configuration information reuses a bsr-config IE or is in a newly-introduced IE.

In one embodiment, the PHR configuration information includes at least one of: phr-Periodic Timer; phr-Prohibit Timer; phr-Tx-Power-Factor Change; multiple-PHR; phr-Type2-Other-Cell; phr-Mode-Other-CG; or Frequency Range (FR) 2 Maximum Permissible Exposure Reporting (mpe-Reporting-FR2).

In one embodiment, the PHR configuration information reuses a phr-Config IE or is in a newly-introduced IE.

In one embodiment, when the RRC release message is used to indicate the terminal to enter the inactive state, the RRC release message carries the configuration information.

An embodiment of the present disclosure provides a configuration information obtaining apparatus, which may be applied to a terminal. The terminal may serve as a user equipment to communicate with a base station. The base station includes but not limited to a base station in a communication system of 4G, 5G, 6G and the like. The terminal includes but not limited to a communication apparatus such as a smart phone, a tablet computer, a wearable device, a sensor, an internet-of-things device or the like.

In one embodiment, the configuration information obtaining apparatus includes one or more processors. The one or more processors are configured to: receive a RRC release message sent by a base station; and obtain configuration information for performing SDT in an inactive state from the RRC release message.

In one embodiment, the configuration information includes at least one of: LC configuration information, BSR configuration information, or PHR configuration information.

In one embodiment, the one or more processors are further configured to: use the configuration information when performing the SDT in the inactive state.

In one embodiment, the one or more processors are further configured to: release the configuration information when entering a connected state or an idle state.

In one embodiment, when the configuration information includes the LC configuration information, the terminal stores LC configuration information received in a connected state.

In one embodiment, when the LC configuration information received in the connected state includes LCP mapping restriction, the one or more processors are configured to: without obtaining the configuration information for performing the SDT in the inactive state from the RRC release message, disabling the LCP mapping restriction received in the connected state.

In one embodiment, when the LC configuration information received in the connected state includes LCP mapping restriction which includes allowed CG-List. The one or more processors are further configured to: without obtaining the configuration information for performing the SDT in the inactive state from the RRC release message, disabling LCP mapping restriction other than the allowedCG-List and/or allowedCG-List for SDT in the LCP mapping restriction received in the connected state.

In one embodiment, wneh the LC configuration information received in the connected state includes LCP mapping restriction, and the one or more processors are further configured to: without obtaining the configuration information for performing the SDT in the inactive state from the RRC release message, use the LCP mapping restriction received in a connected state when performing the SDT in the inactive state.

In one embodiment, the LC configuration information received in the connected state includes LCP mapping restriction, and the one or more processors are further configured to: without obtaining the configuration information for performing the SDT in the inactive state from the RRC release message, determining, based on a use indication in the RRC release message, whether to use the LCP mapping restriction received in the connected state when performing the SDT in the inactive state.

The specific manner in which each module in the apparatuses in the above embodiments performs operations has been detailed in the above method embodiments and will not be repeated herein.

Since the apparatus embodiments substantially correspond to the method embodiments, a reference may be made to part of the descriptions of the method embodiments for the related part. The apparatus embodiments described above are merely illustrative, where the modules described as separate members may be or not be physically separated, and the members displayed as modules may be or not be physical modules, i.e., may be located in one place, or may be distributed to a plurality of network modules. Part or all of the modules may be selected according to actual requirements to implement the objectives of the solutions in the embodiments. Those of ordinary skill in the art may understand and carry out them without creative work.

An embodiment of the present disclosure further provides a communication apparatus, including a processor; a memory for storing computer programs, where the computer programs are executed by the processor to perform the configuration information sending method in any one of the above embodiments.

An embodiment of the present disclosure further provides a communication apparatus, including a processor; a memory for storing computer programs, where the computer programs are executed by the processor to perform the configuration information obtaining method in any one of the above embodiments.

An embodiment of the present disclosure further provides a computer readable storage medium storing computer programs, where the computer programs are executed by the processor to perform the steps of the configuration information sending method in any one of the above embodiments.

An embodiment of the present disclosure further provides a computer readable storage medium storing computer programs, where the computer programs are executed by the processor to perform the steps of the configuration information obtaining method in any one of the above embodiments.

FIG. 9 is a schematic block diagram illustrating an apparatus 900 for sending configuration information according to an embodiment of the present disclosure. The apparatus 900 may be provided as a base station. With reference to FIG. 9, the apparatus 900 includes a processing component 922, a wireless transmission/receiving component 924, an antenna component 926, and a signal processing part specific to a wireless interface. The processing component 922 may further include one or more processors, and one processor of the processing component 922 may be configured to perform the configuration information sending method in any one of the above embodiments.

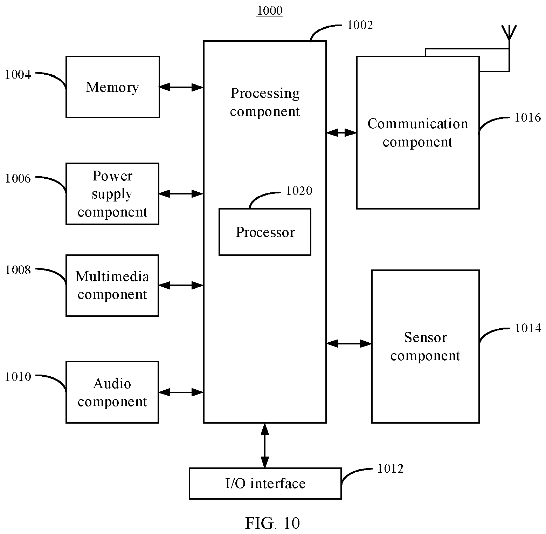

FIG. 10 is a schematic block diagram illustrating an apparatus 1000 for obtaining configuration information according to an embodiment of the present disclosure. For example, the apparatus 1000 may include a mobile phone, a computer, a digital broadcast terminal, a message transceiver, a game console, a tablet device, a medical device, a fitness device, a personal digital assistant, and the like.

As shown in FIG. 10, the apparatus 1000 may include one or more of the following components: a processing component 1002, a memory 1004, a power supply component 1006, a multimedia component 1008, an audio component 1010, an input/output (I/O) interface 1012, a sensor component 1014 and a communication component 1016.

The processing component 1002 generally controls overall operations of the apparatus 1000, such as operations associated with display, phone calls, data communications, camera operations, and recording operations. The processing component 1002 may include one or more processors 1020 to execute instructions to complete all or part of the steps of the above configuration information obtaining methods. In addition, the processing component 1002 may include one or more modules to facilitate the interaction between the processing component 1002 and other components. For example, the processing component 1002 may include a multimedia module to facilitate the interaction between the multimedia component 1008 and the processing component 1002.

The memory 1004 is configured to store various types of data to support operations at the apparatus 1000. Examples of such data include instructions for any application or method operated on the apparatus 1000, contact data, phonebook data, messages, pictures, videos, and so on. The memory 1004 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or compact disk.

The power supply component 1006 supplies power for different components of the apparatus 1000. The power supply component 1006 may include a power supply management system, one or more power sources, and other components associated with power generated, managed and distributed for the apparatus 1000.

The multimedia component 1008 includes a screen that provides an output interface between the apparatus 1000 and a user. In some examples, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may not only sense the boundary of touch or slide actions but also detect the duration and pressure associated with touch or slide operations. In some examples, the multimedia component 1008 includes a front camera and/or a rear camera. When the apparatus 1000 is in an operation mode, such as a shooting mode or a video mode, the front camera and/or the rear camera may receive external multimedia data. Each of the front and rear cameras may be a fixed optical lens system or have a focal length and an optical zoom capability.

The audio component 1010 is configured to output and/or input audio signals. For example, the audio component 1010 includes a microphone (MIC) configured to receive an external audio signal when the apparatus 1000 is in an operation mode, such as a call mode, a recording mode, and a voice recognition mode. The received audio signal may be further stored in the memory 1004 or transmitted via the communication component 1016. In some examples, the audio component 1010 also includes a loudspeaker for outputting an audio signal.

The I/O interface 1012 provides an interface between the processing component 1002 and a peripheral interface module which may be a keyboard, a click wheel, a button, or the like. These buttons may include, but are not limited to, a home button, a volume button, a start button, and a lock button.

The sensor component 1014 includes one or more sensors for providing a status assessment in various aspects to the apparatus 1000. For example, the sensor component 1014 may detect an on/off state of the apparatus 1000, and the relative positioning of a component, for example, the component is a display and a keypad of the apparatus 1000. The sensor component 1014 may also detect a change in position of the apparatus 1000 or a component of the apparatus 1000, the presence or absence of a user in contact with the apparatus 1000, the orientation or acceleration/deceleration of the apparatus 1000 and a change in temperature of the apparatus 1000. The sensor component 1014 may include a proximity sensor configured to detect the presence of nearby objects without any physical contact. The sensor component 1014 may also include a light sensor, such as a CMOS or CCD image sensor, for use in imaging applications. In some examples, the sensor component 1014 may also include an acceleration sensor, a gyro sensor, a magnetic sensor, a pressure sensor, or a temperature sensor.

The communication component 1016 is configured to facilitate wired or wireless communication between the apparatus 1000 and other devices. The apparatus 1000 may access a wireless network based on a communication standard, such as WiFi, 2G or 3G, or 4G LTE or 5G NR or a combination thereof. In an example, the communication component 1016 receives broadcast signals or broadcast associated information from an external broadcast management system via a broadcast channel. In an example, the communication component 1016 also includes a near field communication (NFC) module to facilitate short range communication. For example, the NFC module may be implemented based on a radio frequency identification (RFID) technology, an infrared data association (IrDA) technology, an ultrawideband (UWB) technology, a Bluetooth (BT) technology, and other technologies.

In an exemplary embodiment, the apparatus 1000 may be implemented by one or more of an application specific integrated circuit (ASIC), a digital signal processor (DSP), a digital signal processing device (DSPD), a programmable logic device (PLD), a field programmable gate array (FPGA), a controller, a microcontroller, a microprocessor or other electronic elements for performing the above configuration information obtaining method.

In an exemplary embodiment, a non-transient computer readable storage medium including instructions is also provided, for example, a memory 1004 including instructions. The above instructions may be executed by a processor 1020 of the apparatus 1000 to complete the above configuration information obtaining method. For example, the non-transient computer readable storage medium may be Read Only Memory (ROM), a Random Access Memory (RAM), a CD-ROM, a magnetic tape, a floppy disk, an optical data storage device, and the like.

Other implementations of the present disclosure will be apparent to those skilled in the art from consideration of the specification and practice of the present disclosure herein. The present disclosure is intended to cover any variations, uses, modification or adaptations of the present disclosure that follow the general principles thereof and include common knowledge or conventional technical means in the related art that are not disclosed in the present disclosure. The specification and examples are considered as exemplary only, with a true scope and spirit of the present disclosure being indicated by the following claims.

It is to be understood that the present disclosure is not limited to the precise structure described above and shown in the accompanying drawings, and that various modifications and changes may be made without departing from the scope thereof. The scope of the present disclosure is limited only by the appended claims.

It shall be noted that the relational terms such as "first" and "second" used herein are merely intended to distinguish one entity or operation from another entity or operation rather than to require or imply any such actual relation or order existing between these entities or operations. The term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

The above are detailed descriptions of the methods and the apparatuses provided according to the embodiments of the present disclosure. Specific examples are used herein to set forth the principles and the implementing methods of the present disclosure, and the descriptions of the above embodiments are only meant to help understanding of the methods and the core idea of the present disclosure. Meanwhile, those of ordinary skill in the art may make alterations to the specific embodiments and the scope of application in accordance with the idea of the present disclosure. In conclusion, the contents of the present specification shall not be interpreted as limiting to the present disclosure.

## Claims

1. A configuration information sending method, performed by a base station, comprising:
sending a Radio Resource Control (RRC) release message to a terminal, wherein the RRC release message carries configuration information suitable for the terminal to perform Small Data Transmission (SDT) in an inactive state.

2. The method of claim 1, wherein the configuration information comprises at least one of:
Logical Channel (LC) configuration information;
Buffer Status Report (BSR) configuration information; or
Power Headroom Report (PHR) configuration information.

3. The method of claim 2, wherein the LC configuration information comprises Logical Channel Prioritization (LCP) mapping restriction.

4. The method of claim 3, wherein the LCP mapping restriction comprises at least one of:
an allowed configured grant list (allowedCG-List); or
an allowed configured grant list for small data transmission (allowedCG-List for SDT).

5. The method of claim 4, wherein the LCP mapping restriction further comprises at least one of:
an allowed Sub-Carrier Spacing list (allowedSCS-List);
a maximum Physical Uplink Shared Channel duration (maxPUSCH-Duration);
configured grant type 1 allowed (configuredGrantType1Allowed);
allowed serving cells (allowedServingCells); or
an allowed physical layer priority index (allowedPHY-PriorityIndex).

6. The method of claim 2, wherein the LC configuration information reuses a Logical Channel Configuration (LogicalChannelConfig) Information Element (IE) or is in a newly-introduced IE.

7. The method of claim 2, wherein the BSR configuration information comprises at least one of:
a periodic buffer status report timer (periodicBSR-Timer); or
a retransmission buffer status report timer (retxBSR-Timer).

8. The method of claim 7, wherein when it is determined that the SDT of the terminal supports a scheduling request, the BSR configuration information further comprises:
a logical channel scheduling request delay timer (logicalChannelSR-DelayTimer).

9. The method of claim 2, wherein the BSR configuration information reuses a buffer status report configuration (bsr-Config) information element (IE) or is in a newly-introduced IE.

10. The method of claim 2, wherein the PHR configuration information comprises at least one of:
a power headroom report periodic timer (phr-PeriodicTimer);
a power headroom report prohibit timer (phr-ProhibitTimer);
power headroom report transmission power factor change (phr-Tx-PowerFactorChange);
multiple power headroom reports (multiplePHR);
power headroom report type 2 other cells (phr-Type2OtherCell);
a power headroom report mode other configured grant (phr-ModeOtherCG); or
Frequency Range (FR) 2 maximum permissible exposure reporting (mpe-Reporting-FR2).

11. The method of claim 2, wherein the PHR configuration information reuses a buffer status report configuration (phr-Config) information element (IE) or is in a newly-introduced IE.

12. The method of any one of claims 1 to 11, wherein when the RRC release message is used to indicate the terminal to enter the inactive state, the RRC release message carries the configuration information.

13. A configuration information obtaining method, performed by a terminal, comprising:
receiving an RRC release message sent by a base station; and
obtaining configuration information for performing small data transmission (SDT) in an inactive state from the RRC release message.

14. The method of claim 13, wherein the configuration information comprises at least one of:
Logical Channel (LC) configuration information;
Buffer Status Report (BSR) configuration information; or
Power Headroom Report (PHR) configuration information.

15. The method of claim 14, further comprising:
using the configuration information when performing the SDT in the inactive state.

16. The method of claim 14, further comprising:
releasing the configuration information when entering a connected state or an idle state.

17. The method of claim 14, wherein when the configuration information comprises the LC configuration information, the terminal stores LC configuration information received in a connected state.

18. The method of claim 17, wherein when the LC configuration information received in the connected state comprises LCP mapping restriction, the method further comprises:
without obtaining the configuration information for performing the SDT in the inactive state from the RRC release message, disabling the LCP mapping restriction received in the connected state.

19. The method of claim 17, wherein when the LC configuration information received in the connected state comprises LCP mapping restriction which comprises allowedCG-List, the method further comprises:
without obtaining the configuration information for performing the SDT in the inactive state from the RRC release message, disabling LCP mapping restriction other than allowedCG-List and/or allowedCG-List for SDT in the LCP mapping restriction received in the connected state.

20. The method of claim 17, wherein when the LC configuration information received in the connected state comprises LCP mapping restriction, the method further comprises:
without obtaining the configuration information for performing the SDT in the inactive state from the RRC release message, using the LCP mapping restriction received in the connected state when performing the SDT in the inactive state.

21. The method of claim 17, wherein the LC configuration information received in the connected state comprises LCP mapping restriction, and the method further comprises:
without obtaining the configuration information for performing SDT in the inactive state from the RRC release message, determining, based on a use indication in the RRC release message, whether to use the LCP mapping restriction received in the connected state when performing the SDT in the inactive state.

22. A configuration information sending apparatus, comprising one or more processors, wherein the one or more processors are configured to:
send a Radio Resource Control (RRC) release message to a terminal, wherein the RRC release message carries configuration information suitable for the terminal to perform Small Data Transmission (SDT) in an inactive state.

23. A configuration information obtaining apparatus, comprising one or more processors, wherein the one or more processors are configured to:
receive an RRC release message sent by a base station; and
obtain configuration information for performing Small Data Transmission (SDT) in an inactive state from the RRC release message.

24. A communication apparatus, comprising:
a processor; and
a memory for storing computer programs;
wherein the computer programs are executed by the processor to perform the configuration information sending method of any one of claims 1 to 12.

25. A communication apparatus, comprising:
a processor; and
a memory for storing computer programs;
wherein the computer programs are executed by the processor to perform the configuration information obtaining method of any one of claims 13 to 21.

26. A computer readable storage medium, storing computer programs, wherein the computer programs are executed by a processor to perform steps of the configuration information sending method of any one of claims 1 to 12.

27. A computer readable storage medium, storing computer programs, wherein the computer programs are executed by a processor to perform steps of the configuration information obtaining method of any one of claims 13 to 21.
